# EUROPÄISCHE PATENTSCHRIFT

(11) **EP 1 073 856 B1**
(45) Veröffentlichungstag und Bekanntmachung des Hinweises auf die Patenterteilung: **11.12.2002**
(21) Anmeldenummer: 99915442.0
(22) Anmeldetag: 29.04.1999
(51) Int. Cl.: F16L 11/15, B29D 23/18

(54) **KUNSTSTOFFROHR**
PLASTIC PIPE
TUYAU EN MATIERE PLASTIQUE

(30) Priorität: 29.04.1998 CH 96498
(43) Veröffentlichungstag der Anmeldung: 07.02.2001
(73) Patentinhaber: Chemspeed Ltd., 4302 Augst (CH)
(72) Erfinder: GÜLLER, Rolf, CH-5027 Herznach (CH); MUNCH, Seraphin, F-68170 Rixheim (FR); JABLONSKI, Philippe, F-68300 Saint-Louis (FR); GEES, Thomas, CH-4313 Möhlin (CH)
(74) Vertreter: Bollhalder, Renato
(86) Internationale Anmeldenummer: CH9900179
(87) Internationale Veröffentlichungsnummer: WO99056049

(56) Entgegenhaltungen:
- EP-A- 0 494 321
- US-A- 2 304 828

## Beschreibung

Die vorliegende Erfindung bezieht sich auf ein Kunststoffrohr, wie es im Oberbegriff des unabhängigen Patentanspruchs 1 definiert ist, sowie auf ein Verfahren zur Herstellung eines Kunststoffrohres.

Zur Verbindung zweier Kammern zum Flüssigkeits- und/oder Gastransfer von einer Kammer zur anderen sind hohlzylinderförmige Kunststoffrohre aus Polytetrafluorethylen bekannt, die in einem weiten Temperaturbereich einsetzbar und gegen die üblicherweise in der chemischen Industrie verwendeten Lösungsmittel resistent sind. Diese Kunststoffrohre sind aber im allgemeinen relativ schwer biegbar und somit für Anwendungen, bei denen eine flexible Verbindung der beiden Kammern gefordert ist, nicht geeignet, insbesondere wenn die Verbindung über eine kurze Distanz erfolgt. Eine flexible Verbindung ist beispielsweise dann notwendig, wenn die eine Kammer geschüttelt werden soll, während die andere ruhig bleiben soll, oder die Kammern am oberen Ende fixiert werden müssen.

Zur flexiblen Verbindung zweier Kammern wurden Kunststoffrohre entwickelt, die mindestens über einen Teil ihrer Länge balgartig angeordnete Falten aufweisen, die ein Biegen des Kunststoffrohrs ermöglichen. Diese Falten werden durch eine nachträgliche Thermoverformung aus zumindest einem Teil eines zuvor hergestellten hohlzylinderförmigen Rohrrohlings aus einem thermoplastischen Kunststoff erzeugt, d.h. der betreffende Teil wird auf eine Temperatur oberhalb der Erweichungstemperatur des Kunststoffs erhitzt und dann mittels eines Formwerkzeugs in Falten geformt. Dieser ganze Prozess kann auch kontinuierlich durchgeführt werden. Die so erhaltenen Produkte sind unter dem Namen "corrugated tubes" markterhältlich.

Derartige biegbare Kunststoffrohre weisen den Nachteil auf, dass bei einer Temperaturerhöhung schon weit unter der Erweichungstemperatur während des Gebrauchs die Falten wieder verschwinden, und zwar je höher die Temperatur ist, desto schneller. Da bei der ursprünglichen, stabilen Anordnung der Polymere im Rohr keine Falten vorhanden sind, nehmen die Polymere mit der Zeit wieder ihre ursprüngliche Form an. Die gewünschte Biegbarkeit ist daher mit der Zeit und vor allem nach dem Wiedererkalten nicht mehr oder nur mehr in einem ungenügenden Ausmass vorhanden. Zudem verändert sich die Länge des Rohrs stark, da der Faltenbereich beispielsweise nach einem Einsatz bei z.B. 80°C während 20 Stunden bis zu fünfmal länger werden kann.

Angesichts der Nachteile der bisher bekannten, oben beschriebenen Kunststoffrohre liegt der Erfindung die folgende Aufgabe zugrunde. Zu schaffen ist ein Kunststoffrohr der eingangs erwähnten Art, dessen Biegbarkeit in einem vergleichsweise grösseren Temperaturbereich gewährleistet ist und dessen Länge nach dem Wiedererkalten etwa gleich gross ist, d.h. dessen Falten etwa die selbe Form aufweisen und die selben Winkel einschliessen.

Diese Aufgabe wird durch das erfindungsgemässe Kunststoffrohr gelöst, wie es im unabhängigen Patentanspruch 1 definiert ist. Patentanspruch 7 bezieht sich auf ein Verfahren zur Herstellung und Patentanspruch 11 auf eine erfindungsgemässe Verwendung eines solchen Kunststoffrohrs. Bevorzugte Ausführungsvarianten ergeben sich aus den abhängigen Patentansprüchen.

Das Wesen der Erfindung besteht darin, dass ein Kunststoffrohr, das im wesentlichen aus polyfluorierten Kohlenwasserstoff-Polymeren besteht und mindestens über einen Teil seiner Länge balgartig angeordnete Falten aufweist, die ein Biegen des Kunststoffrohrs ermöglichen, die balgartig angeordneten Falten nach einer vorübergehenden Einwirkung einer Temperatur zwischen -100°C und 200°C sowohl ihren gegenseitigen Abstand als auch die zwischen zwei benachbarten Falten gebildeten Winkel im wesentlichen beibehalten oder wieder herstellen, da die Polymere dank einer Faltenformung durch Drechseln bei der genannten Temperatureinwirkung stabil bleiben oder wieder in ihre ursprüngliche Form zurückgehen.

Die Temperaturresistenz der Falten in einem Bereich von -100°C bis 200°C gewährleistet eine Biegbarkeit des Kunststoffrohrs auf Zeit in einem grösseren Temperaturbereich als bei den herkömmlichen biegbaren Kunststoffrohren. Die Temperaturresistenz wird einerseits durch die Wahl eines geeigneten Kunststoffs und anderseits durch das Erzeugen der Falten durch mechanisches Drechseln eines Kunststoffrohrrohlings bei einer Temperatur unterhalb der Erweichungstemperatur des Kunststoffs erreicht. Unter mechanischer oder hydraulischer Belastung werden minime Druckoder Zugkräfte in der Grössenordnung von 2 bis 3 bar verstanden, die bei den herkömmlichen biegbaren Kunststoffrohren zu einer Verformung der Falten führen.

Mit Vorteil besteht das Kunststoffrohr im wesentlichen aus Polytetrafluorethylen (PTFE), fluoriertem Ethylen-Propylen (FEP), Perfluoralkoxy (PFA), Polychlortrifluorethylen (PCTFE) oder Polyvinylidenfluorid (PVDF) oder einem Gemisch davon. Diese Materialien haben einerseits eine sehr gute Temperaturbeständigkeit und anderseits auch eine sehr gute chemische Beständigkeit beispielsweise gegen die üblichen in der chemischen Industrie verwendeten Lösungsmittel.

Die Herstellung des Kunststoffrohrs inklusive der Falten erfolgt vorzugsweise durch Drechseln eines Kunststoffrohrrohlings auf einer Drehbank bei einer Temperatur unterhalb von ca. 30°C. Bei der ursprünglichen, stabilen Anordnung der Polymere sind daher Falten vorhanden, so dass bei einer Temperaturerhöhung über die Erweichungstemperatur und anschliessendem Wiedererkalten die Falten erhalten bleiben, im Gegensatz zu nachträglich mit Falten versehenen Rohren.

Bei einem erfindungsgemässen Verfahren zur Herstellung eines derartigen Kunststoffrohrs wird zunächst ein Kunststoffrundstab hergestellt und danach aus diesem das Kunststoffrohr mit Falten bei einer Temperatur unterhalb der Erweichungstemperatur des Kunststoffs gedrechselt. Im Gegensatz zum oben beschriebenen Stand der Technik werden die Falten nicht nachträglich durch Thermoverformung aus einem zuvor hergestellten hohlzylinderförmigen Kunststoffrohrrohling erzeugt, so dass bei der stabilen Polymeranordnung bereits Falten vorhanden sind und die Polymere somit immer wieder in die entspannte Form, den Faltenbalg, drängen.

Bei einer bevorzugten Ausführungsvariante wird das Kunststoffrohr nach dem Anbringen der Falten auf eine Temperatur über 80°C, vorzugsweise zwischen 120°C und 200°C, erwärmt, um die nach dem mechanischen Herstellen der Falten im Kunststoffrohr allenfalls vorhandenen Poren dauerhaft zu schliessen, so dass keine Flüssigkeit und kein Gas durch die Poren austreten kann. Die hierfür notwendige Temperatur hängt einerseits vom verwendeten Kunststoff und anderseits von der Dauer der Wärmebehandlung ab. Die Wärmebehandlung des Kunststoffrohrs kann beispielsweise in einem flüssigen Wärmeträger mittels Mikrowellen erfolgen, z.B. in einem gewöhnlichen Mikrowellengerät für die Küche. Es sind auch andere Temperaturquellen und Wärmeübertragungsmittel verwendbar.

Das erfindungsgemässe Kunststoffrohr ist in erster Linie zur flexiblen Verbindung zweier Kammern zum Flüssigkeitsund/oder Gastransfer von einer Kammer zur anderen, wobei es sich bei der transferierten Flüssigkeit um Lösungsmittel und/oder Wärmeträger mit einer Temperatur zwischen -100°C und 200°C handelt, vorgesehen. Insbesondere ist es sehr gut geeignet beim Einsatz von Polydimethylsiloxan oder Polydiphenylsiloxan als Wärmeträger.

Im folgenden wird das erfindungsgemässe Kunststoffrohr unter Bezugnahme auf die beigefügten Zeichnungen anhand von zwei Ausführungsbeispielen detaillierter beschrieben. Es zeigen:

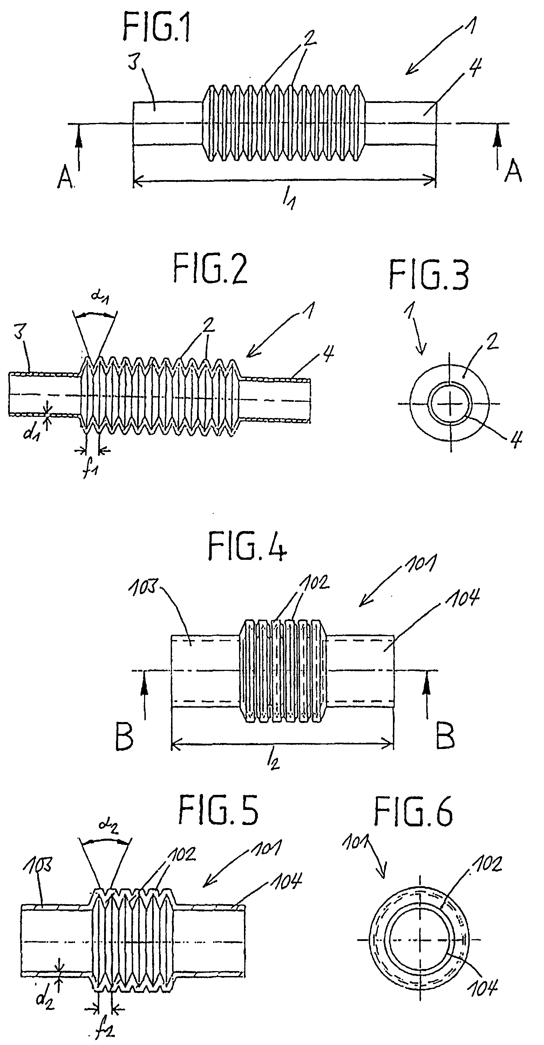

- Fig. 1 -: eine Seitensansicht eines ersten Ausführungsbeispiels eines erfindungsgemässen Kunststoffrohrs mit einer relativ kleinen Wandstärke;
- Fig. 2 -: einen Schnitt durch das Kunststoffrohr von Fig. 1 gemäss der Linie A-A;
- Fig. 3 -: eine Stirnansicht des Kunststoffrohrs von Fig. 1;
- Fig. 4 -: eine Seitensansicht eines zweiten Ausführungsbeispiels eines erfindungsgemässen Kunststoffrohrs mit einer relativ grossen Wandstärke;
- Fig. 5 -: einen Schnitt durch das Kunststoffrohr von Fig. 4 gemäss der Linie B-B; und
- Fig. 6 -: eine Stirnansicht des Kunststoffrohrs von Fig. 4.

### Figuren 1 bis 3

Das dargestellte erfindungsgemässe Kunststoffrohr 1 umfasst zwei hohlzylinderförmige Endbereiche 3 und 4, zwischen den ein balgartiger Mittelbereich mit zwölf Falten 2 angeordnet ist. Die Wandstärke d₁ ist vorzugsweise über das ganze Kunststoffrohr 1 konstant und beträgt zwischen ca. 0,1 mm und ca. 1 mm, vorzugsweise zwischen ca. 0,2 mm und ca. 0,7 mm. Der Abstand f₁ zweier benachbarter Falten 2 beträgt zwischen ca. 0,5 mm und ca. 5 mm, vorzugsweise zwischen ca. 1 mm und ca. 2 mm. Zwei benachbarte Falten 2 schliessen einen Winkel α₁ ein, der vorzugsweise zwischen 20° und 90° liegt und im vorliegenden Fall 45° ist. Die Gesamtlänge l₁ des Kunststoffrohrs 1 ist normalerweise kleiner oder gleich 5 cm.

Der maximale Biegewinkel des Kunststoffrohrs 1 hängt von der Anzahl Falten 2, der Wandstärke d₁, dem Abstand f₁ zweier benachbarter Falten 2 und dem Winkel α₁ zwischen zwei Falten 2 ab, ist normalerweise mindestens 20° im ganzen Temperaturbereich und bleibt über eine lange Einsatzdauer konstant.

Das Kunststoffrohr 1 besteht vorzugsweise im wesentlichen aus Polytetrafluorethylen (PTFE) oder anderen polyfluorierten Kohlenwasserstoffen, insbesondere fluoriertem Ethylen-Propylen (FEP), Perfluoralkoxy (PFA), Polychlortrifluorethylen (PCTFE) und/oder Polyvinylidenfluorid (PVDF). Diese polyfluorierten Kohlenwasserstoffe können rein oder mit Zusatzstoffen versehen verwendet werden.

Die Herstellung des Kunststoffrohrs inklusive der Falten erfolgt beispielsweise durch Drechseln eines Kunststoffrohrrohlings auf einer Drehbank bei Normaltemperatur. Das mit Falten versehene Kunststoffrohr wird dann während mehrerer Minuten einer Temperatur zwischen ca. 120°C und 200°C ausgesetzt, je nach verwendetem Kunststoff.

### Figuren 4 bis 6

Bei diesem zweiten Ausführungsbeispiel umfasst das dargestellte erfindungsgemässe Kunststoffrohr 101 zwei hohlzylinderförmige Endbereiche 103 und 104, zwischen den ein balgartiger Mittelbereich mit sechs Falten 102 angeordnet ist. Die Wandstärke d₂ ist über das ganze Kunststoffrohr 101 konstant. Der Abstand zweier benachbarter Falten 102 ist mit f₂, der Winkel dazwischen mit α₂ und die Gesamtlänge des Kunststoffrohrs 101 mit l₂ bezeichnet. Die Wandstärke d₂ ist hier grösser und die Anzahl der Falten 102 kleiner als beim ersten Ausführungsbeispiel, was einen kleineren maximalen Biegewinkel des Kunststoffrohrs 101 zur Folge hat.

Zu den vorbeschriebenen Kunststoffrohren sind weitere konstruktive Variationen realisierbar. Hier ausdrücklich erwähnt sei noch, dass auch mehrere voneinander getrennte Faltenbereiche vorhanden sein können oder sich die Falten über die ganze Länge des Kunststoffrohrs erstrecken können.

## Patentansprüche

1. Kunststoffrohr (1, 101), das im wesentlichen aus polyfluorierten Kohlenwasserstoff-Polymeren besteht und mindestens über einen Teil seiner Länge balgartig angeordnete Falten (2, 102) aufweist, die ein Biegen des Kunststoffrohrs (1, 101) ermöglichen, **dadurch gekennzeichnet, dass** die balgartig angeordneten Falten (2, 102) nach einer vorübergehenden Einwirkung einer Temperatur zwischen -100°C und 200°C sowohl ihren gegenseitigen Abstand (f₁, f₂) als auch die zwischen zwei benachbarten Falten (2, 102) gebildeten Winkel (α₁, α₂) im wesentlichen beibehalten oder wieder herstellen, da die Polymere dank einer Faltenformung durch Drechseln bei der genannten Temperatureinwirkung stabil bleiben oder wieder in ihre ursprüngliche Form zurückgehen.

2. Kunststoffrohr (1, 101) nach Anspruch 1, **dadurch gekennzeichnet, dass** es weitgehend porenfrei ist.

3. Kunststoffrohr (1, 101) nach Anspruch 1 oder 2, **dadurch gekennzeichnet, dass** es im wesentlichen aus Polytetrafluorethylen (PTFE), fluoriertem Ethylen-Propylen (FEP), Perfluoralkoxy (PFA), Polychlortrifluorethylen (PCTFE) oder Polyvinylidenfluorid (PVDF) oder einem Gemisch davon besteht.

4. Kunststoffrohr (1, 101) nach einem der Ansprüche 1 bis 3, **dadurch gekennzeichnet, dass** seine Wandstärke (d₁, d₂) zwischen ca. 0,1 mm und ca. 1 mm, vorzugsweise zwischen ca. 0,2 mm und ca. 0,7 mm, beträgt.

5. Kunststoffrohr (1, 101) nach einem der Ansprüche 1 bis 4, **dadurch gekennzeichnet, dass** es zwischen 3 und 20 Falten (2, 102) aufweist und/oder der Abstand (f₁, f₂) zweier benachbarter Falten (2, 102) zwischen ca. 0,5 mm und ca. 5 mm, vorzugsweise zwischen ca. 1 mm und ca. 2 mm, beträgt.

6. Kunststoffrohr (1, 101) nach einem der Ansprüche 1 bis 5, **dadurch gekennzeichnet, dass** die Falten (2, 102) derart ausgebildet sind, dass es bei einer maximalen Länge (l₁, l₂) von 5 cm, insbesondere 3 cm, in einem Temperaturbereich von -100°C bis 200°C um mindestens 20° biegbar ist.

7. Verfahren zur Herstellung eines Kunststoffrohrs (1, 101) nach einem der Ansprüche 1 bis 6, **dadurch gekennzeichnet, dass** zunächst ein Kunststoffrundstab hergestellt und danach aus diesem das Kunststoffrohr (1, 101) mit Falten (2, 102) bei einer Temperatur unterhalb der Erweichungstemperatur des Kunststoffs gedrechselt wird.

8. Verfahren nach Anspruch 7, **dadurch gekennzeichnet, dass** das Drechseln auf einer Drehbank bei einer Temperatur unterhalb von ca. 30°C erfolgt.

9. Verfahren nach Anspruch 7 oder 8, **dadurch gekennzeichnet, dass** das Kunststoffrohr (1, 101) nach dem Anbringen der Falten (2, 102) auf eine Temperatur über 80°C, vorzugsweise zwischen 120°C und 200°C, erwärmt wird.

10. Verfahren nach Anspruch 9, **dadurch gekennzeichnet, dass** das Erwärmen des Kunststoffrohrs (1, 101) in einer Flüssigkeit mittels Mikrowellen erfolgt.

11. Verwendung eines Kunststoffrohrs (1, 101) nach einem der Ansprüche 1 bis 6 zur flexiblen Verbindung zweier Kammern zum Flüssigkeits- und/oder Gastransfer von einer Kammer zur anderen, wobei es sich bei der transferierten Flüssigkeit um Lösungsmittel und/oder Wärmeträger mit einer Temperatur zwischen -100°C und 200°C handelt.

## Claims

1. Plastic tube (1, 101), which essentially consists of polyfluorinated hydrocarbon polymers and, at least over one portion of its length, has pleats (2, 102) arranged in the manner of a bellows and permitting the plastic tube (1, 101) to be bent, **characterized in that** the pleats (2, 102) arranged in the manner of a bellows essentially retain or regain both their distance (f₁, f₂) from one another and the angles (α₁, α₂) formed between two adjacent pleats (2, 102) after a period of exposure to a temperature of from -100 to 200°C, because, during exposure to the temperatures mentioned, the polymers remain stable or resume their initial shape, since the pleats were formed by turning.

2. Plastic tube (1, 101) according to Claim 1, **characterized in that** it is substantially free from pores.

3. Plastic tube (1, 101) according to Claim 1 or 2, **characterized in that** it essentially consists of polytetrafluoroethylene (PTFE), fluorinated ethylenepropylene (FEP), perfluoroalkoxy (PFA), polychlorotrifluoroethylene (PCTFE) or polyvinylidene fluoride (PVDF), or of a mixture of these.

4. Plastic tube (1, 101) according to any of Claims 1 to 3, **characterized in that** its wall thickness (d₁, d₂) is from about 0.1 mm to about 1 mm, preferably from about 0.2 mm to about 0.7 mm.

5. Plastic tube (1, 101) according to any of Claims 1 to 4, **characterized in that** it has from 3 to 20 pleats (2, 102) and/or the distance (f₁, f₂) between two adjacent pleats (2, 102) is from about 0.5 mm to about 5 mm, preferably from about 1 mm to about 2 mm.

6. Plastic tube (1, 101) according to any of Claims 1 to 5, **characterized in that** the design of the pleats (2, 102) is such that a length (l₁, l₂) of not more than 5 cm of the tube, in particular not more than 3 cm, can be bent by at least 20° within the temperature range from -100 to 200°C.

7. Process for producing a plastic tube (1, 101) according to any of Claims 1 to 6, **characterized in that** first a round plastic rod is produced and then from this the plastic tube (1, 101) with pleats (2, 102) is turned at a temperature below the softening point of the plastic.

8. Process according to Claim 7, **characterized in that** the turning takes place on a lathe at a temperature below about 30°C.

9. Process according to Claim 7 or 8, **characterized in that** the plastic tube (1, 101) is heated to a temperature above 80°C, preferably from 120 to 200°C, after introducing the pleats (2, 102).

10. Process according to Claim 9, **characterized in that** the heating of the plastic tube (1, 101) takes place in a liquid by means of microwaves.

11. Use of a plastic tube (1, 101) according to any of Claims 1 to 6 for flexibly connecting two chambers for transfer of liquid and/or of gas from one chamber to the other, the liquid transferred being solvent and/or heating medium with a temperature of from -100 to 200°C.

## Revendications

1. Tube en matière synthétique (1, 101), qui se compose pour l'essentiel de polymères d'hydrocarbures polyfluorés et présente, au moins sur une partie de sa longueur, des plis disposés sous la forme de soufflets (2, 102), qui rendent possible une flexion du tube en matière synthétique (1, 101), **caractérisé en ce que** les plis disposés sous la forme de soufflets (2, 102), après une action temporaire d'une température comprise entre -100°C et 200°C, maintiennent pour l'essentiel ou retrouvent à nouveau, non seulement leur écart réciproque (f₁, f₂), mais aussi l'angle (α₁, α₂) formé entre deux plis voisins (2, 102), parce que les polymères, grâce à une formation de plis par dressage par tour, sous l'effet de la température cité, restent stables ou retournent à nouveau à leur forme initiale.

2. Tube en matière synthétique (1, 101) selon la revendication 1, **caractérisé en ce qu'**il est, dans une large mesure, exempt de pores.

3. Tube en matière synthétique (1, 101) selon la revendication 1 ou 2, **caractérisé en ce qu'**il se compose pour l'essentiel de polytétrafluoroéthylène (PTFE), d'éthylène-propylène fluoré (EPF), de perfluoroalcoxy (PFA), de polychlorotrifluoroéthylène (PCTFE) ou de fluorure de polyvinylidène (FPVD) ou d'un mélange de ces derniers.

4. Tube en matière synthétique (1, 101) selon l'une quelconque des revendications 1 à 3, **caractérisé en ce que** son épaisseur de paroi (d₁, d₂) est comprise entre environ 0,1 mm et environ 1 mm, de préférence entre environ 0,2 mm et environ 0,7 mm.

5. Tube en matière synthétique (1, 101) selon l'une quelconque des revendications 1 à 4, **caractérisé en ce qu'**il présente entre 3 et 20 plis (2, 102) et/ou **en ce que** l'écart (f₁, f₂) entre deux plis voisins (2, 102) est compris entre environ 0,5 mm et environ 5 mm, de préférence entre environ 1 mm et environ 2 mm.

6. Tube en matière synthétique (1, 101) selon l'une quelconque des revendications 1 à 5, **caractérisé en ce que** les plis (2, 102) sont constitués de telle sorte qu'il peut être plié sous un angle d'au moins 20° sur une longueur maximale (l₁, l₂) de 5 cm, en particulier de 3 cm, dans un domaine de température de -100°C à 200°C.

7. Procédé de fabrication d'un tube en matière synthétique (1, 101) selon l'une quelconque des revendications 1 à 6, **caractérisé en ce que** l'on fabrique tout d'abord une tige ronde en matière synthétique et que l'on procède ensuite au dressage par tour, à partir de celle-ci, du tube en matière plastique (1, 101) avec des plis (2, 102), à une température en dessous de la température de ramollissement de la matière synthétique.

8. Procédé selon la revendication 7, **caractérisé en ce que** le dressage par tour se fait sur un tour à une température en dessous d'environ 30°C.

9. Procédé selon la revendication 7 ou 8, **caractérisé en ce que** le tube en matière synthétique (1, 101), après la réalisation des plis (2, 102) est échauffé à une température au-delà de 80°C, de préférence entre 120°C et 200°C.

10. Procédé selon la revendication 9, **caractérisé en ce que** le chauffage du tube en matière synthétique (1, 101) se fait dans un liquide à l'aide de micro-ondes.

11. Utilisation d'un tube en matière synthétique (1, 101) selon l'une quelconque des revendications 1 à 6, en vue de la connexion souple de deux chambres pour le transfert de liquides et/ou de gaz d'une chambre à l'autre, étant donné qu'il s'agit, dans le cas du liquide transféré, d'un solvant et/ou d'un agent caloporteur ayant une température comprise entre -100°C et 200°C.
